# DEMANDE DE BREVET EUROPEEN

(11) **EP 1 971 152 A2**
(43) Date de publication de la demande: **17.09.2008**
(21) Numéro de dépôt: 08102555.3
(22) Date de dépôt: 12.03.2008
(51) Int. Cl.: H04N 7/26

(54) **Gestion de données pour un traitement d'images**

(30) Priorité: 14.03.2007 FR 0701839
(71) Demandeur: STMICROELECTRONICS SA, 92120 Montrouge (FR)
(72) Inventeur: Cauchy, Xavier, 38190 Laval (FR); Thery, Xavier, 38000 Grenoble (FR); Philippe, Anthony, 38000 Grenoble (FR); Vos, Mark Petrus, 38920 Crolles (FR)
(74) Mandataire: Cabinet Plasseraud

(57) **Abrégé**

Un système de traitement d'images comprend une mémoire adaptée pour stocker, à des adresses déterminées, des données associées à des pixels d'images, les pixels ayant des coordonnées spatiales dans un référentiel d'image ayant des premier et second axes ; un dispositif de traitement comprenant un processeur traitant les données associées, et un dispositif d'interface accédant dans la mémoire à des adresses associées à des pixels d'un bloc de pixels. Au niveau du dispositif d'interface, on reçoit (21) des informations d'accès indiquant une adresse de référence dans la mémoire, des informations relatives aux dimensions du bloc selon les axes du référentiel d'image, et un mode de stockage.
En fonction du mode de stockage, on sélectionne (22) au moins une règle d'accès parmi une pluralité de règles, chacune correspondant à un parcours de pixels successifs selon les axes du référentiel d'image suivant un mode de stockage. On accède (23) à la mémoire aux adresses associées aux pixels du bloc, en appliquant la règle sélectionnée à partir de l'adresse de référence et en fonction des dimensions du bloc.

## Description

La présente invention concerne le traitement d'images et plus particulièrement la gestion de données relatives à des images stockées dans une mémoire externe à un dispositif de traitement d'image.

Dans certaines applications, comme par exemple dans le domaine de la vidéo, une mémoire de stockage de masse, ou mémoire externe, stocke des données qui sont destinées à être traitées par un processeur d'un dispositif de traitement de données selon un algorithme déterminé. Les données peuvent être stockées dans cette mémoire selon un format qui diffère du format de données supporté par le processeur.

Ces données stockées en mémoire externe peuvent notamment correspondre à des informations de chrominance et de luminance. En effet, les images vidéo sont classiquement codées en utilisant de telles informations. Pour convertir un signal vidéo en des données de luminance et en des données de chrominance, le signal est échantillonné. Puis, des données de chrominance et/ou de luminance sont associées à tout ou partie des échantillons en fonction du codage de l'image utilisé.

Différents codages sont classiquement utilisés. Ainsi, par exemple, les termes '4:2:2' et '4:2:0' désignent des codages différents qui sont classiquement utilisés, chacun décrivant une structure d'une image numérique différente. Les termes 4:2:2 signifient que la chrominance est sous-échantillonnée horizontalement par un facteur deux relativement à la luminance. Les termes 4:2:0 signifie que la chrominance est sous-échantillonnée horizontalement et verticalement par un facteur deux relativement à la luminance. Ainsi, les données stockées varient non seulement en fonction du codage de l'image vidéo, qui fournit plus ou moins de données de luminance et de données de chrominance pour une image vidéo, mais aussi en fonction du mode de stockage, encore appelé format de stockage, des données codées. En effet, les données de chrominance et de luminance peuvent être stockées alternativement et successivement dans l'ordre des pixels d'une image ou encore de manière séparée, c'est-à-dire les données de chrominance d'un côté et les données de luminance d'un autre côté.

Afin de récupérer les données dans la mémoire externe, il est classique d'utiliser un dispositif de type DMA ('Direct Memory Access', en anglais). Un dispositif DMA permet de réaliser des transferts directs de données entre une mémoire externe et une mémoire interne associée au processeur, sans recourir à l'intervention du microprocesseur, sauf exception, notamment pour initier et conclure le transfert des données.

Généralement, le processeur traite les données vidéo relativement aux localisations respectives des pixels composant les images vidéo.

Les données sont stockées à des adresses respectives dans la mémoire externe, puis, pour les besoins du traitement de données que le processeur applique, elles sont requises auprès du DMA en fonction de la localisation des pixels auxquelles elles sont respectivement associées, c'est-à-dire en général en fonction de coordonnées spatiales des différents pixels dans les images.

Pour certains traitements appliqués par le processeur, ce dernier peut requérir auprès du DMA la récupération dans la mémoire externe de données déterminées, sans pour autant connaître le format de stockage des données dans la mémoire externe. Ainsi, le processeur peut ne pas être en mesure d'indiquer au DMA la ou les adresses en mémoire correspondant aux données qu'il requiert.

Dans de telles conditions, le DMA a en charge de traduire une information reçue dans une requête de données depuis le dispositif de traitement en une adresse selon le format de stockage dans la mémoire externe. Pour effectuer une telle traduction et récupérer dans la mémoire externe les données requises, une règle de correspondance figée est généralement déterminée dans le DMA, de façon à faire correspondre l'information reçue dans la requête avec une adresse dans la mémoire externe.

Plus précisément, dans une architecture classique d'utilisation d'un DMA, le DMA est en charge de déterminer un bloc de données à récupérer dans la mémoire externe, et coopère avec un module d'interface qui lui est connecté. Ce dernier est plus spécifiquement en charge de déterminer les différentes adresses des données comprises dans le bloc de données à récupérer. Ainsi, architecturalement, la détermination des adresses des données à récupérer correspond à une première étape présentant un premier niveau de granularité qui permet de déterminer un bloc de données à récupérer, cette première étape étant mise en oeuvre par le DMA, et une seconde étape présentant un second niveau de granularité permettant de déterminer les adresses des données comprises dans ce bloc de données, cette seconde étape étant mise en oeuvre au niveau du module d'interface.

Un module d'interface fonctionne sur la base d'une règle de correspondance qui est figée car elle est directement liée à un mode de stockage donné. Ainsi, lorsqu'un DMA est en charge de récupérer des blocs de données qui correspondent respectivement à des modes de stockages différents, plusieurs modules correspondant chacun à l'un de ces différents modes de stockage, sont couplés au DMA considéré.

Il est donc difficile d'adapter un DMA à différents modes de stockage dans la mémoire externe.

La présente invention vise à contourner cette difficulté.

Un objectif de la présente invention est d'augmenter la flexibilité d'un DMA, et de fournir un DMA qui soit notamment en mesure de s'adapter de manière plus aisée à différents modes de stockage dans la mémoire externe.

Un premier aspect de la présente invention propose un procédé de gestion de données dans un système de traitement d'images comprenant :
- une mémoire adaptée pour stocker, à des adresses déterminées, des données associées à des pixels d'images, lesdits pixels ayant des coordonnées spatiales dans un référentiel d'image ayant un premier et un second axe ;
- un dispositif de traitement comprenant un processeur adapté pour traiter les données respectivement associées à des pixels des images, et
- un dispositif d'interface adapté pour accéder à la mémoire à des adresses associées à des pixels d'un bloc de pixels dans le référentiel d'image.

Le procédé comprend les étapes suivantes exécutées au niveau du dispositif d'interface :
/a/ recevoir des informations d'accès se rapportant à un bloc de pixels déterminé indiquant :
   - une adresse de référence dans la mémoire ;
   - des informations relatives aux dimensions du bloc de pixels selon les premier et second axes du référentiel d'image ; et
   - un mode de stockage ;
/b/ en fonction du mode de stockage indiqué, sélectionner au moins une règle d'accès parmi une pluralité de règles d'accès distinctes, chacune des règles d'accès correspondant à un parcours de pixels successifs selon les premier et second axes du référentiel d'image suivant un mode de stockage parmi une pluralité de modes de stockage; et
/c/ accéder à la mémoire aux adresses associées aux pixels du bloc de pixels, en appliquant la règle d'accès sélectionnée à partir de l'adresse de référence indiquée et en fonction des dimensions du bloc de pixels.

Dans de telles conditions, le dispositif d'interface dispose d'une pluralité de règles d'accès qui sont adaptés à des modes de stockage respectifs différents des données relatives aux pixels d'une image dans la mémoire. De manière générale, une règle d'accès définit un parcours des adresses dans la mémoire qui correspond à un parcours de pixels successifs selon un axe du référentiel d'image. Ces différentes règles d'accès permettent de gérer un déplacement d'adresse en adresse dans la mémoire qui correspond à un déplacement de pixel en pixel dans le référentiel d'image selon les différents axes du référentiel d'image.

Par la suite, à titre d'exemple, le procédé selon un mode de réalisation de la présente invention est présenté pour l'essentiel dans son application à une image présentant deux dimensions.

Toutefois, il convient de noter ici qu'il est aisé d'appliquer un tel procédé à une image présentant plus de deux dimensions. Il suffit à cet effet de considérer un référentiel d'image présentant un nombre d'axes correspondant à ce nombre de dimensions.

On peut définir une règle d'accès qui correspond à la fois à un parcours de pixel en pixel successivement selon le premier axe du référentiel d'image et à un parcours de pixel en pixel successivement selon le second axe du référentiel d'image. On peut également prévoir de définir deux règles d'accès différentes respectivement pour les deux axes du référentiel d'image.

Puis, sur la base d'informations d'accès qu'il reçoit, le dispositif d'interface est alors en mesure de sélectionner une règle d'accès parmi cette pluralité de règles d'accès. En effet, dans les informations d'accès reçues, le mode de stockage qui est associé aux pixels de l'image ou des images à traiter, lui est indiqué et lui permet donc d'appliquer une règle d'accès qui est adaptée à ce mode de stockage. Ce mode de stockage correspond au mode de stockage selon lequel les données correspondant aux pixels d'une image à traiter sont stockées dans la mémoire.

Le dispositif d'interface reçoit en outre des informations qui lui permettent de déterminer le bloc de pixels courant à traiter. En effet, il reçoit d'une part une information lui indiquant une adresse de référence dans la mémoire, et, d'autre part, une information lui indiquant la taille du bloc de pixels à prendre en considération pour l'accès à la mémoire demandé.

Ce bloc de pixels à considérer peut correspondre à un bloc de pixels dont les données sont à traiter par le dispositif de traitement. Tel est le cas lorsque le dispositif d'interface reçoit une requête de lecture en mémoire.

Ce bloc de pixels à considérer peut correspondre à un bloc de pixels dont les données sont à stocker dans la mémoire, car ces données viennent d'être traitées par le dispositif de traitement. Tel est le cas lorsque le dispositif d'interface reçoit une requête d'écriture en mémoire.

Les informations d'accès permettent de déterminer dans le référentiel d'image le bloc de pixels à traiter. Ce bloc de pixels commence à partir d'un pixel de référence qui correspond à l'adresse de référence indiquée par les informations d'accès, et s'étend sur la taille de bloc indiquée dans les informations d'accès selon les premier et second axes du référentiel d'image.

Ainsi, dans de telles conditions, on est en mesure d'accéder successivement à la mémoire aux adresses qui correspondent aux pixels du bloc de pixels ainsi déterminé à partir des informations d'accès, en suivant l'ordre successif des pixels selon les deux axes du référentiel d'image. En d'autres termes, la règle de lecture permet de traduire dans le référentiel des adresses de la mémoire des coordonnées spatiales de pixels exprimées dans le référentiel d'image.

Un tel procédé de gestion de données est de ce fait flexible et adaptatif à différents modes de stockage sans toutefois requérir une duplication des modules d'interface connectés à un DMA pour le parcours d'un bloc de pixels donné dans la mémoire.

On peut ainsi avantageusement appliquer une telle règle d'accès par la mise en oeuvre d'un micro programme. Un tel micro programme comprend des micro-instructions permettant de gérer des sauts d'adresse dans la mémoire qui correspondent au parcours des pixels du bloc de pixels.

Un tel mode de réalisation de la présente invention permet une grande flexibilité au regard, notamment, du format de stockage des données, ainsi qu'au regard du mode opératoire du bus d'interconnexion utilisé.

Une règle d'accès selon l'un des premier et second axes du référentiel d'image peut correspondre à une séquence de sauts d'adresse dans la mémoire, et en fonction de l'adresse de référence indiquée, on peut alors déterminer une partie au moins de cette séquence de sauts à appliquer à partir de l'adresse de référence.

Ainsi, connaissant la séquence de sauts d'adresse dans la mémoire qui correspond au parcours successif des pixels selon un des axes du référentiel d'image, et ayant déterminé la partie de cette séquence de sauts qu'il convient d'appliquer à partir de l'adresse de référence indiquée dans les informations d'accès, on peut alors parcourir la mémoire en correspondance avec le parcours successif des pixels du bloc de pixels déterminé selon l'axe du référentiel d'image considéré.

Un tel procédé de gestion de données peut avantageusement être appliqué dans le cas où le dispositif d'interface a en charge de récupérer les données dans la mémoire pour les fournir au dispositif de traitement, ainsi que dans le cas où le dispositif d'interface a en charge de recevoir les données traitées par le dispositif de traitement et de les stocker dans la mémoire.

Ainsi, la règle d'accès à la mémoire peut être une règle de lecture de données. Dans ce cas, à l'étape /c/, les données stockées aux adresses peuvent être lues et, après l'étape /c/, lesdites données lues peuvent être fournies au processeur.

La règle d'accès à la mémoire peut être une règle d'écriture de données. Dans ce cas, à l'étape /a/, des données à écrire en mémoire sont en outre reçues au niveau du dispositif d'interface, et à l'étape /c/, lesdites données reçues sont stockées dans la mémoire aux adresses accédées respectives.

Dans un mode de réalisation de la présente invention, à l'étape /b/, une première règle d'accès, correspondant à un parcours de pixels successifs selon le premier axe du référentiel d'image, et une seconde règle d'accès, correspondant à un parcours de pixels successifs selon le second axe, sont sélectionnées. Dans ce contexte, à l'étape /c/, les étapes suivantes sont réalisées :
/1/ appliquer au bloc de pixels la première règle d'accès sur le bloc de pixels de la taille indiquée, selon le premier axe du référentiel d'image, à partir de l'adresse de référence ;
/2/ obtenir une adresse suivante en appliquant la seconde règle d'accès à partir de l'adresse de référence entre deux pixels consécutifs selon le second axe du référentiel d'image ;
/3/ appliquer la première règle d'accès sur le bloc de pixels de la taille indiquée selon le premier axe du référentiel d'image, à partir de l'adresse suivante ;
/4/ obtenir une adresse suivante selon le second axe du référentiel d'image en appliquant la seconde règle d'accès à partir de la dernière adresse suivante obtenue ;
/5/ répéter l'étape /3/ à partir de l'adresse suivante obtenue à l'étape /4/ et répéter l'étape /4/.

Grâce à ces dispositions, le dispositif d'interface est en mesure de parcourir efficacement les adresses de la mémoire en concordance avec la succession de pixels selon les deux axes du référentiel d'image. Dans ce mode de réalisation, on parcourt le bloc de pixels déterminé à traiter selon un premier axe, par exemple un axe horizontal, en appliquant la première règle d'accès, puis lorsqu'on atteint la fin du bloc de pixels selon cet axe, c'est-à-dire dire dans l'exemple considéré, lorsqu'on atteint la fin d'une ligne, on applique la seconde règle d'accès pour déterminer l'adresse en mémoire qui correspond au premier pixel de la prochaine ligne du bloc de pixels. Une telle mise en oeuvre des deux règles d'accès selon les deux axes du référentiel d'image est efficace.

De préférence, la séquence de sauts de la règle d'accès selon un axe du référentiel d'image a une taille qui permet de parcourir la taille maximale du bloc de pixels déterminé selon ledit axe du référentiel d'image.

Dans un mode de réalisation de la présente invention, les règles d'accès sont respectivement stockées dans une mémoire associée au dispositif d'interface, et la sélection d'une règle d'accès correspond à un saut à une adresse dans ladite mémoire associée, à laquelle est stockée la règle d'accès sélectionnée.

Grâce à ces dispositions, un dispositif d'interface destiné à coopérer avec un composant de type DMA est en mesure de s'adapter de manière aisé à des changements de formats de stockage en mémoire.

Un deuxième aspect de la présente invention propose un dispositif d'interface dans un système de traitement d'images comprenant en outre :
Un troisième aspect de la présente invention propose un système de traitement de données comprenant un dispositif de traitement selon le deuxième aspect de la présente invention.
Un quatrième aspect de la présente invention propose un programme d'ordinateur pour un dispositif d'interface comprenant des instructions aptes à mettre en oeuvre le procédé selon le premier aspect de la présente invention, lors d'une exécution du programme par des moyens de traitement du dispositif d'interface. D'autres aspects, buts et avantages de l'invention apparaîtront à la lecture de la description d'un de ses modes de réalisation.

L'invention sera également mieux comprise à l'aide des dessins, sur lesquels :
- la figure 1 illustre l'architecture d'un système de gestion de données selon un mode de réalisation de la présente invention ;
- la figure 2 illustre les principales étapes d'un procédé selon la présente invention,
- la figure 3 illustre un bloc de pixels déterminé dans un référentiel d'image selon un mode de réalisation de la présente invention ;
- la figure 4 illustre l'application d'une règle d'accès selon un mode de réalisation de la présente invention ;
- la figure 5 illustre une architecture d'un dispositif d'interface selon un mode de réalisation de la présente invention ;
- la figure 6 illustre un dispositif d'interface selon un mode de réalisation de la présente invention ; et
- les figures 7 et 8 illustrent l'application d'un procédé selon un mode de réalisation de la présente invention dans le cas d'un mode de stockage particulier classiquement référencé sous les termes 'Macroblock Luma'.

Pour la suite, on entend par les termes 'référentiel d'image', le référentiel défini pour une image par un axe des abscisses horizontal dans la direction de gauche à droite et un axe des ordonnées vertical dans la direction de haut en bas.

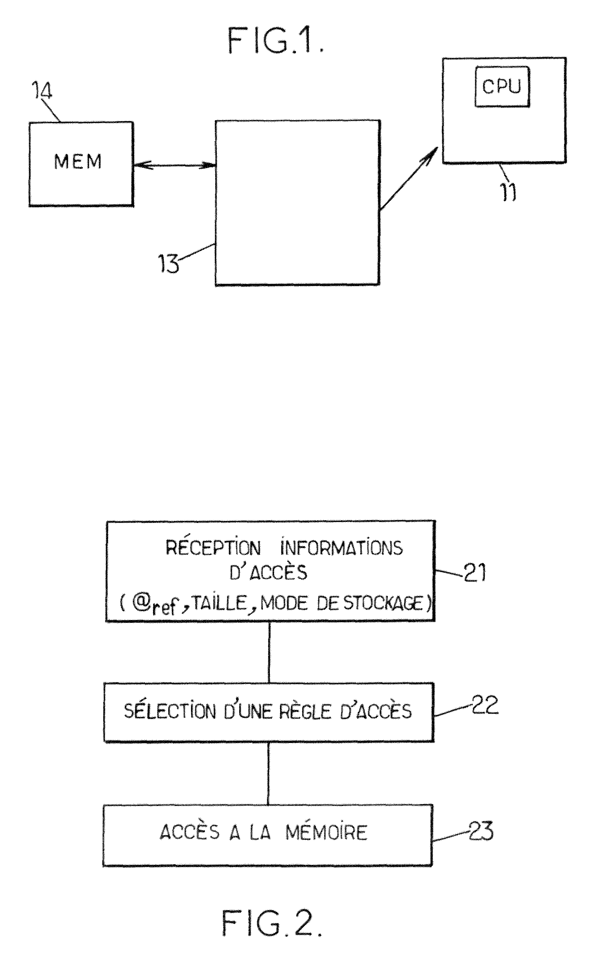

La figure 1 illustre une architecture d'un système de gestion de données selon un mode de réalisation de la présente invention. Un tel système comprend une mémoire 14 dans laquelle sont stockées, selon un mode de stockage ou même plusieurs modes de stockage, des données correspondant à des pixels d'images à traiter. Il comprend aussi un dispositif de traitement 11 qui est en charge de traiter, par un processeur CPU (pour 'Central Processing Unit'), les données stockées dans la mémoire en se basant sur un ordre successif des pixels dans le référentiel d'image.

Un tel système comprend en outre un dispositif d'interface 13 qui est en charge de communiquer avec la mémoire 14 et avec le dispositif de traitement 11, soit directement, soit par l'intermédiaire d'un ou plusieurs autres dispositifs intermédiaires.

Un procédé selon un mode de réalisation de la présente invention permet soit de récupérer les données en mémoire, par exemple, lorsque le dispositif d'interface reçoit une commande de lecture, soit d'écrire les données en mémoire, par exemple, lorsque le dispositif d'interface reçoit une commande d'écriture.

Dans le contexte de la lecture en mémoire, le dispositif de traitement récupère dans la mémoire des données à traiter pour les fournir au dispositif de traitement, alors que dans le contexte de l'écriture en mémoire, les données traitées sont fournies par le dispositif de traitement pour être stockées en mémoire.

Quelque soit le type de commande à mettre en oeuvre au niveau du dispositif d'interface, ce dernier, dans un mode de réalisation de la présente invention est adapté pour déterminer les adresses en mémoire des données qui correspondent aux pixels dans le référentiel d'image du bloc de pixels déterminé à traiter.

Par la suite, à titre d'illustration, le procédé est plus précisément décrit dans son application à la lecture de données. Toutefois, les mêmes principes peuvent aisément être directement appliqués au procédé dans son application d'écriture.

La figure 2 illustre les principales étapes du procédé selon un mode de réalisation de la présente invention.

En une étape 21, le dispositif d'interface 13 reçoit des informations d'accès. Ces informations d'accès indiquent notamment une adresse de référence dans la mémoire, la taille du bloc de pixels à traiter, c'est-à-dire la taille du bloc de pixels pour lesquels la lecture des données est requise, ainsi que le mode de stockage suivant lequel les données à lire en mémoire ont été stockées.

La présente invention n'est pas limitée dans la façon d'indiquer ces informations d'accès.

Ainsi, la taille du bloc de pixels à traiter peut être indiquée sous diverses formes, aucune limitation n'étant attachée à cette forme. On peut notamment prévoir que la taille est indiquée en précisant le nombre de lignes que comprend le bloc de pixels à traiter ainsi que le nombre de pixels par lignes, ou le nombre de colonnes comprises dans ledit bloc de pixels ainsi que le nombre des pixels par colonne. On peut également prévoir que ces informations d'accès indiquent le nombre total de pixels compris dans le bloc de pixels à traiter ainsi que le nombre de pixels par ligne, ou encore que ces informations indiquent le nombre total de pixels dans le bloc ainsi que le nombre de pixels par colonne.

Le dispositif d'interface peut aussi connaître au préalable le nombre de pixels par ligne d'un bloc de pixels à traiter. Dans un tel cas, on peut alors prévoir que les informations d'accès reçues par le dispositif d'interface indiquent seulement le nombre total de pixels compris dans le bloc de pixels déterminé à récupérer. Le dispositif d'interface peut connaître le nombre de pixels par ligne d'un bloc de pixels à traiter par le fait qu'une telle information est préalablement mémorisée dans une mémoire accessible depuis ce dispositif d'interface. Cette information relative au nombre de pixels par ligne peut aussi être déduite du mode de stockage qui est également indiqué par les informations d'accès reçues. En effet, selon le mode de stockage, il est possible d'en déduire la taille des blocs de pixels à traiter selon une dimension dans le référentiel d'image.

En outre, l'adresse de référence indiquée dans ces informations d'accès peut être indiquée directement sous la forme d'une adresse dans la mémoire ou encore sous la forme de coordonnées spatiales dans le référentiel d'image.

Dans le cas où elle est indiquée en coordonnées spatiales dans le référentiel d'image, ce sont les coordonnées spatiales d'un pixel de référence, correspondant aux données stockées dans la mémoire à l'adresse de référence, qui sont alors fournies au dispositif d'interface. Il est ensuite apte à traduire ces coordonnées spatiales en une adresse en mémoire.

L'adresse de référence correspond au pixel de référence à partir duquel le bloc de pixels à traiter est défini. En effet, à partir du pixel de référence et de la taille du bloc de pixels indiquée dans les informations d'accès, on peut définir un bloc de pixels qui correspond au bloc de pixels à traiter.

Le mode de stockage indiqué dans les informations d'accès peut également être indiqué sous une forme quelconque.

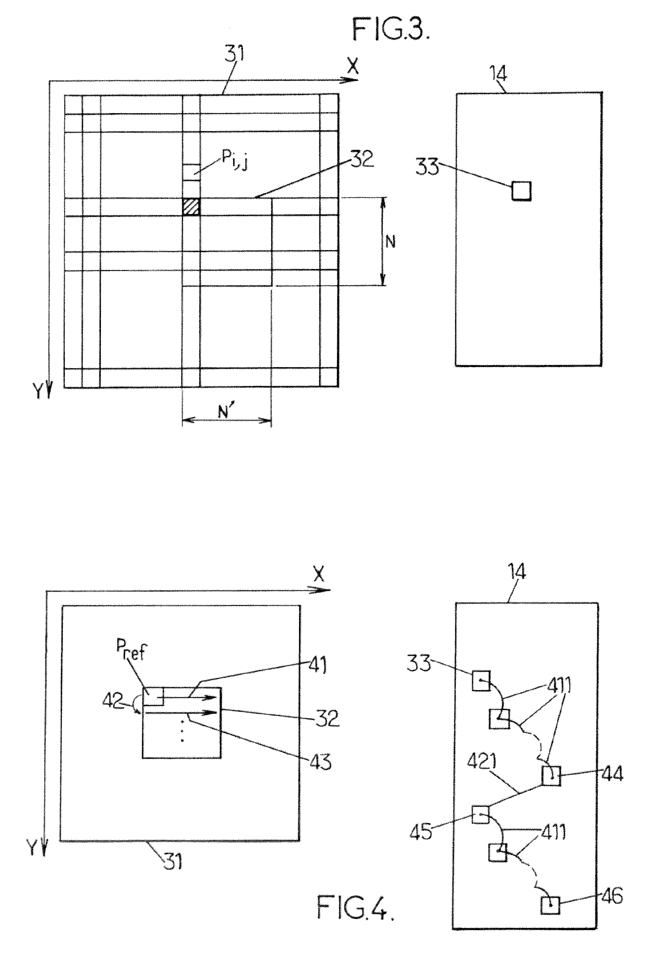

La figure 3 illustre une telle étape de détermination du bloc de pixels à traiter à partir du pixel de référence et de la taille du bloc de pixels indiquée dans les informations d'accès.

A titre illustratif, un bloc de pixels à traiter comprend une pluralité de lignes de pixels et une pluralité de colonnes de pixels. Toutefois, aucune limitation n'est attachée à la présente invention en ce qui concerne la taille d'un tel bloc de pixels. Ainsi, un tel bloc de pixels peut correspondre à une simple ligne de pixels comprenant un nombre quelconque K de pixels, ou encore à une simple colonne de pixels comprenant un nombre quelconque K' de pixels.

Le référentiel d'image est représenté par un premier axe X selon une ligne horizontale dans le sens de gauche à droite et un second axe Y selon une ligne verticale dans le sens haut en bas. Dans ce référentiel d'image illustré à titre d'exemple, chaque pixel P_{i,j} d'un ensemble de pixels 31 associés à une image a une coordonnée i selon X, et une coordonnée j selon Y.

Un pixel P_{ref} correspond au pixel de référence utilisé pour déterminer le bloc de pixels à traiter. Dans l'exemple illustré à cette figure 3, la taille du bloc de pixels à traiter est indiquée dans les informations d'accès par le nombre N' de pixels par ligne et le nombre N de pixels par colonne.

Ainsi, sur réception des informations d'accès au niveau du dispositif d'interface, les pixels auxquels correspondent les données à récupérées peuvent être identifiés. Ils correspondent aux pixels compris dans le bloc de pixels 32.

La figure 3 illustre également la mémoire 14 comprenant une zone de stockage 33 à l'adresse de référence qui correspond à la zone dans laquelle sont stockées ou seront stockées les données relatives au pixel de référence P_{ref}.

Puis, en se référant à nouveau à la figure 2, à une étape 22 est réalisée une sélection d'une règle d'accès, sur la base du mode de stockage indiqué dans les informations d'accès reçues.

Le dispositif d'interface 13 a accès à une pluralité de règles d'accès qui correspondent chacune à un mode de stockage donné. Ainsi, plus grand est le nombre de règles d'accès accessibles par le dispositif d'interface, plus ce dispositif est adaptatif et flexible. A cet effet, dans un mode de réalisation de la présente invention, une mémoire est associée au dispositif d'interface 13. Cette mémoire associée mémorise différentes règles d'accès. Puis, en fonction du mode de stockage indiquée, le dispositif d'interface accède à une zone mémoire dans laquelle est mémorisée la règle d'accès correspondante.

Une règle d'accès selon un mode de réalisation de la présente invention correspond à une séquence de sauts.

La figure 4 illustre l'application d'une règle d'accès selon un mode de réalisation de la présente invention. L'ensemble de pixels 31 associés à une image comprend le bloc de pixels déterminé 32 considéré auquel le procédé selon un mode de réalisation de la présente est appliqué. Ce bloc de pixels 32 comprend un pixel de référence P_{ref}, dont les données sont stockées à l'adresse de référence 33 dans la mémoire 14.

Ici, on applique en premier lieu la règle d'accès selon l'axe X du référentiel d'image. A cet effet, on détermine la partie de la séquence de sauts définie par la règle d'accès q'il convient d'appliquer à partir de l'adresse de référence. Les pixels sont tout d'abord parcourus selon l'axe X du référentiel d'image. Ce sens de parcours est illustré par une flèche 41 sur la première ligne de pixels du bloc de pixels 32. Ce parcours 41 dans le référentiel d'image correspond à une règle d'accès selon l'axe X qui est illustrée par les sauts d'adresse en mémoire 411.

Puis, cette partie de séquence de sauts est ensuite appliquée en mémoire à partir de l'adresse de référence indiquée dans les informations d'accès, et ce sur la taille selon l'axe X du bloc de pixels déterminé dans les informations d'accès. Cette partie de sauts en mémoire est illustrée par les sauts 411 dans la mémoire 14. Le pixel situé à la fin de la première ligne du bloc de pixels correspond à l'adresse en mémoire 44 dans la mémoire 14.

Ensuite, afin d'appliquer la règle d'accès selon l'axe X sur la deuxième ligne du bloc de pixels déterminé, comme cela est illustré par la flèche 43, il convient alors de déterminer l'adresse en mémoire du premier pixel de cette deuxième ligne. A cet effet, on applique la règle d'accès selon l'axe Y à partir du pixel de référence P_{ref}.

Au préalable, en fonction de l'adresse de référence, comme précédemment pour l'application de la règle d'accès selon l'axe X, on détermine la partie de la séquence de sauts qu'il convient d'appliquer selon l'axe Y à partir du pixel de référence.

On applique alors le premier saut indiqué dans cette partie de séquence de sauts qui est illustré par le saut 421 dans la mémoire 14 depuis l'adresse 44 vers l'adresse 45.

A partir de cette adresse 45, on applique alors la même séquence de sauts de la règle d'accès selon l'axe X telle que déterminée ci-avant, qui correspond aux sauts 411. A la fin de cette partie de séquence de sauts, on se trouve à l'adresse 46 dans la mémoire 14.

En réitérant les étapes précédentes, on accède à des adresses de la mémoire 14 qui correspond au parcours dans le référentiel d'image.

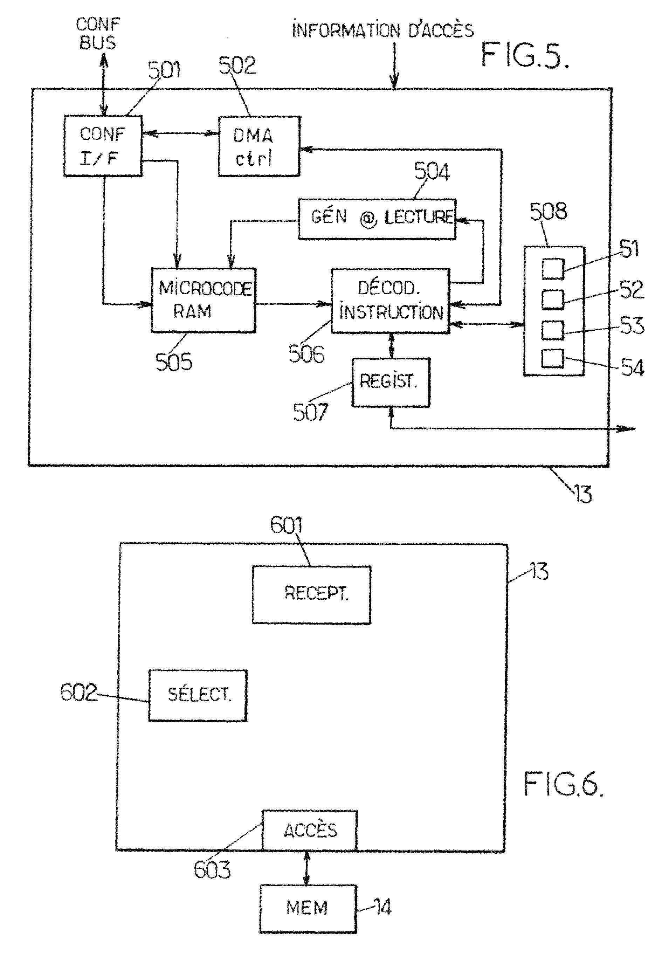

La figure 5 illustre une architecture d'un dispositif d'interface selon un mode de réalisation de la présente invention. Un tel dispositif d'interface comprend une interface de configuration 501 adaptée pour recevoir des paramètres de configuration et pour télécharger un micro code dans une RAM (pour 'Random Access Memory', en anglais) 505 via un bus de configuration. Un tel micro code correspondant à l'application des règles d'accès gérées par le dispositif d'interface selon un mode de réalisation de la présente invention.

Ce dispositif d'interface comprend en outre, un module de contrôle de DMA 502 qui est en charge de gérer la réception de requête au DMA. Ce module de contrôle permet notamment d'éviter qu'un accès à la RAM soit effectué alors qu'une requête DMA est en cours de traitement.

Un tel dispositif d'interface comprend un décodeur d'instruction 506 qui est en charge d'interpréter les instructions fournies par la RAM afin de configurer des bus et des signaux de contrôle du dispositif d'interface à des valeurs spécifiques.

Il comprend aussi un générateur d'adresse de lecture 506, ou encore Compteur de Programme, qui est en charge de générer la prochaine micro instruction du microcode qui sera lu depuis la RAM.

Il contient en outre un module de registres 507 qui contient un nombre de registres pouvant être utilisés par le microcode, soit à usage spécifique, soit à usage général.

Il comprend également un module d'interface de trafic 508 qui est en charge de gérer l'interface avec un module de mise en forme de signal générant des signaux utiles pour un contrôle d'arbitrage des bus et générant des signaux d'asservissement sur le dispositif d'interface.

A cet effet, ce module d'interface de trafic 508 gère un compteur de pixels par ligne 51, un compteur de lignes 52, un premier registre d'état 53 dans lequel est stockée la valeur de l'adresse en mémoire du premier pixel de la ligne de pixels en cours de gestion et un second registre d'état 54 dans lequel est stockée la valeur de l'adresse de référence de l'accès mémoire en cours de gestion.

Une règle d'accès selon un mode de réalisation de la présente invention correspond à une séquence de sauts d'adresse en mémoire. Cette séquence de sauts en mémoire peut avantageusement être mise en oeuvre par un micro code qui fait appel à des micro instructions telles que définies ci-dessous.

Il est possible de prévoir une bibliothèque de micro-instructions qui sont appelés dans les différents micro codes qui correspondent respectivement aux différentes règles d'accès qu'un dispositif d'interface est apte à gérer et à mettre en oeuvre.

La figure 6 illustre un dispositif d'interface selon un mode de réalisation de la présente invention. Ce dispositif d'interface comprend une unité de réception 601 adaptée pour recevoir des informations d'accès indiquant une adresse de référence dans la mémoire, des informations relatives à la taille dudit bloc de pixels déterminé selon les premier et second axes du référentiel d'image et un mode de stockage.

Il comprend en outre une unité de sélection 602 adaptée pour sélectionner, en fonction du mode de stockage indiqué, au moins une règle d'accès parmi une pluralité de règles d'accès, chacune des règles d'accès correspondant à un parcours de pixels successifs selon les premier et second axes du référentiel d'image suivant un mode de stockage déterminé.

Il comprend aussi une unité de gestion d'accès mémoire 603 adaptée pour accéder aux adresses en mémoire correspondant aux pixels dudit bloc de pixels, en appliquant la règle d'accès sélectionnée à partir de l'adresse de référence indiquée et en fonction de la taille indiquée dudit bloc de pixels.

L'unité de gestion d'accès 603 applique une règle d'accès par la mise en oeuvre d'un micro programme, ledit micro programme comprenant des micro-instructions permettant de gérer des sauts d'adresse dans la mémoire qui correspondent au parcours des pixels du bloc de pixels déterminé dans le référentiel d'image.

L'unité de gestion d'accès 603 applique une règle d'accès selon un axe du référentiel d'image qui correspond à une séquence de sauts d'adresse dans la mémoire, et, en fonction de l'adresse de référence indiquée, détermine une partie de cette séquence de sauts à appliquer à partir de l'adresse de référence.

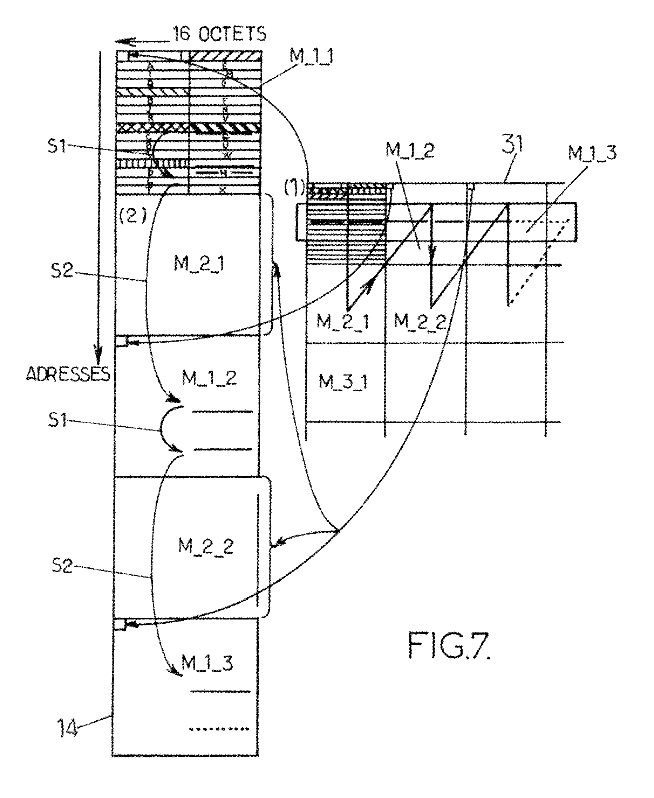

La figure 7 illustre un agencement en mémoire 14 de données relatives à des pixels d'une image selon un mode de stockage particulier qui est classiquement référencé sous les termes 'Macroblock Luma'. Ces données correspondent à des pixels qui sont illustrés dans le référentiel d'image 31. L'organisation des pixels de selon un tel mode de stockage est basée sur une gestion par macro-blocs de 2 octets sur 2 octets, les macro-blocs M_i_1, ... M_i_2, ...M_i_Y, dans le référentiel d'image selon l'axe horizontal, pour i compris entre 1 et X, ladite image ayant un nombre X de lignes et un nombre Y de colonnes, et les macro-blocs M_1_j, M_2_j et M_X_j, pour j compris entre 1 et Y selon l'axe vertical du référentiel d'image.

Les macro-blocs sont stockés en mémoire 14 come illustré, c'est-à-dire que les macro-blocs M_1_1, M_2_1, M_1_2, M_2_2, .... se succèdent.

Dans un tel contexte, le parcours d'une ligne de pixels dans le référentiel d'image correspond à une succession de sauts dans la mémoire 14, qui correspondent à la répétition d'une série de sauts successifs S1 et S2.

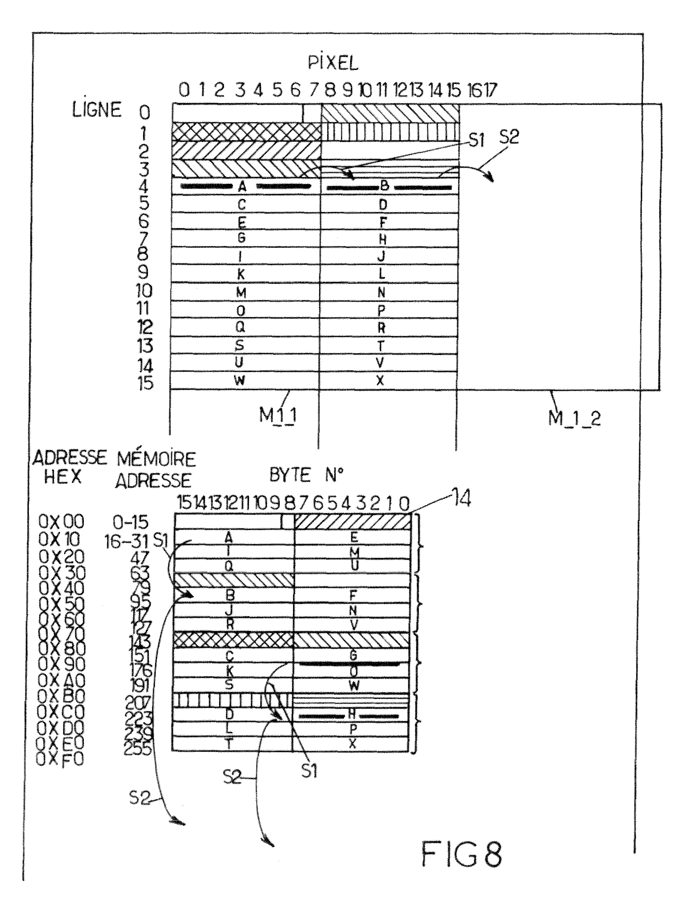

La figure 8 illustre un tel parcours en mémoire en détail. Ainsi, par exemple, pour parcourir la ligne d'index 4 du macro-bloc M_1_1 qui comprend un premier octet A et un second octet B, il convient de prévoir de passer de l'octet A à l'octet B en mémoire 14 par un saut S1. En mémoire, ce saut S1 d'un octet à un autre octet d'une même ligne d'un même macro-bloc de l'image considérée correspond à un saut de 4 lignes en mémoire 14.

Puis, pour passer de l'octet B à l'octet suivant du macro-bloc M_1_2 placé sur la même ligne que l'octet B dans le référentiel d'image, un saut S2 est définit pour le parcours correspondant dans la mémoire 14. Ce saut S2 correspond à un saut de 32 lignes.

Il en résulte que, en appliquant successivement des sauts S1 suivis de S2, on parcourt en mémoire les données relatives aux pixels qui se succèdent sur une ligne du référentiel d'image.

Dans un tel contexte, on est en mesure de déterminer en fonction de l'adresse de référence, lequel des deux sauts S1 et S2 est à appliquer en premier lieu.

En effet, ici, les adresses (en hexa) en mémoire 14 comprises entre 0x00 et Ox3F correspondent aux données relatives aux pixels d'une ligne sur deux (en partant de la première ligne) de la première partie du macro-bloc M_1_1 qui correspond aux lignes d'index 0 à 7. Puis, les adresses en mémoire 14 comprises entre 0x80 et 0xBF correspondent aux données relatives aux pixels d'une ligne sur deux (en partant de la deuxième ligne) de la première partie du macro-bloc M_1_1 qui correspond aux lignes d'index 0 à 7.

Puis, les adresses (en hexa) en mémoire 14 comprises entre 0x40 et 0x7F correspondent aux données relatives aux pixels d'une ligne sur deux (en partant de la première ligne) de la seconde partie du macro-bloc M_1_1 qui correspond aux lignes d'index 8 à 15. Puis, les adresses en mémoire 14 comprises entre 0xC0 et 0xFF correspondent aux données relatives aux pixels d'une ligne sur deux (en partant de la deuxième ligne) de la seconde partie du macro-bloc M_1_1 qui correspond aux lignes d'index 8 à 15.

Dans de telles conditions, il est aisé de définir le saut parmi les sauts de la séquence de sauts à appliquer en fonction de l'adresse de référence, en prenant en considération le bit 6 de l'adresse de référence.

En effet, si le bit 6 de l'adresse de référence est égal à 0, le premier saut à appliquer est le saut S1 et si le bit 6 de l'adresse de référence est égal à 1, le premier saut à appliquer est le saut S2.

Ainsi, à partir de l'adresse de référence, en vue de déterminer le saut à appliquer de la séquence de sauts correspondant à la règle d'accès sélectionnée, on peut avantageusement appliquer le masque 0x40 à cette adresse de référence, et en fonction du résultat soit appliquer S1, soit appliquer S2, puis successivement S2, S1, ... ou S2, S1,... respectivement.

Dans un mode de réalisation de la présente invention, l'unité de gestion d'accès 603 est en charge de déterminer la partie de la séquence de sauts à appliquer à partir de l'adresse de référence sur la base d'une comparaison de l'adresse de référence avec une valeur prédéterminée.

## Revendications

1. Procédé de gestion de données dans un système de traitement d'images comprenant :
- une mémoire (14) adaptée pour stocker, à des adresses déterminées, des données associées à des pixels d'images respectives, lesdits pixels ayant des coordonnées spatiales dans un référentiel d'image ayant un premier et un second axe ;
- un dispositif de traitement (11) comprenant un processeur adapté pour traiter les données associées à des pixels des images, et
- un dispositif d'interface (13) adapté pour accéder dans la mémoire à des adresses associées à des pixels d'un bloc de pixels ;
ledit procédé comprenant les étapes suivantes exécutées au niveau du dispositif d'interface :
/a/ recevoir des informations d'accès se rapportant à un bloc de pixels déterminé et indiquant :
- une adresse de référence dans la mémoire ;
- des informations relatives aux dimensions respectives du bloc de pixels selon les premier et second axes du référentiel d'image ; et
- un mode de stockage ;
/b/ en fonction du mode de stockage indiqué, sélectionner au moins une première règle d'accès, correspondant à un parcours de pixels successifs selon le premier axe du référentiel d'image, et une seconde règle d'accès, correspondant à un parcours de pixels successifs selon le second axe ; parmi une pluralité de règles d'accès distinctes, chacune desdites règles d'accès correspondant à un parcours des pixels successifs selon les premier et second axes du référentiel d'image suivant un mode de stockage parmi une pluralité de modes de stockage ; et
/c/ accéder à la mémoire aux adresses associées aux pixels du bloc de pixels, en appliquant les règles d'accès sélectionnées à partir de l'adresse de référence et en fonction des dimensions du bloc de pixels selon les étapes suivantes :
/1/ appliquer la première règle d'accès sur la taille indiquée du bloc de pixels selon le premier axe du référentiel d'image, à partir de l'adresse de référence ;
/2/ obtenir une adresse suivante en appliquant la seconde règle d'accès, selon le second axe du référentiel d'image, à partir de l'adresse de référence entre deux pixels consécutifs ;
/3/ appliquer la première règle d'accès sur la taille indiquée du bloc de pixels selon le premier axe du référentiel d'image, à partir de l'adresse suivante ;
/4/ obtenir une adresse suivante en appliquant la seconde règle d'accès selon le second axe du référentiel d'image à partir de la dernière adresse suivante obtenue entre deux pixels consécutifs ;
/5/ répéter l'étape /3/ à partir de l'adresse suivante obtenue à l'étape /4/ et répéter l'étape /4/.

2. Procédé de gestion de données selon la revendication 1, dans lequel une règle d'accès est appliquée par la mise en oeuvre d'un micro programme, ledit micro programme comprenant des micro-instructions permettant de gérer des sauts d'adresse dans la mémoire qui correspondent au parcours des pixels du bloc de pixels.

3. Procédé de gestion de données selon la revendication 1 ou 2, dans lequel une règle d'accès selon l'un des premier et second axes du référentiel d'image correspond à une séquence de sauts d'adresse dans la mémoire, et dans lequel, en fonction de l'adresse de référence indiquée, on détermine une partie au moins de cette séquence de sauts à appliquer à partir de l'adresse de référence.

4. Procédé de gestion de données selon l'une quelconque des revendications précédentes, dans lequel la règle d'accès à la mémoire est une règle de lecture de données et dans lequel, à l'étape /c/, les données stockées aux adresses déterminées sont lues et, après l'étape /c/, lesdites données lues sont fournies au processeur.

5. Procédé selon l'une quelconque des revendications précédentes, dans lequel la règle d'accès à la mémoire est une règle d'écriture de données, et dans lequel, à l'étape /a/, des données à écrire en mémoire sont en outre reçues au niveau du dispositif d'interface (13), et à l'étape /c/, lesdites données reçues sont stockées dans la mémoire aux adresses accédées respectives.

6. Dispositif d'interface (13) dans un système de traitement d'images comprenant en outre :
- une mémoire (14) adaptée pour stocker, à des adresses de déterminées, des données associées à des pixels d'images respectives, lesdits pixels ayant des coordonnées spatiales dans un référentiel d'image ayant un premier et un second axe, et
- un dispositif de traitement (11) comprenant un processeur adapté pour traiter les données associées à des pixels des images ;
ledit dispositif d'interface comprenant :
- une unité de réception (601) adaptée pour recevoir des informations d'accès se rapportant à un bloc de pixels déterminé et indiquant :
- une adresse de référence dans la mémoire ;
- des informations relatives aux dimensions respectives du bloc de pixels selon les premier et second axes du référentiel d'image ; et
- un mode de stockage ;
- une unité de sélection (602) adaptée pour sélectionner, en fonction dudit mode de stockage indiqué, au moins une règle d'accès parmi une pluralité de règles d'accès distinctes, chacune desdites règles d'accès correspondant à un parcours de pixels successifs selon les premier et second axes du référentiel d'image suivant un mode de stockage parmi une pluralité de modes de stockage ; et
- une unité de gestion d'accès mémoire (603) adaptée pour accéder à la mémoire aux adresses associées aux pixels dudit bloc de pixels, en appliquant la règle d'accès sélectionnée à partir de ladite adresse de référence et en fonction des dimensions du bloc de pixels.
dans lequel l'unité de gestion d'accès (603) est adaptée pour sélectionner une première règle d'accès, correspondant à un parcours de pixels successifs selon le premier axe du référentiel d'image, et une seconde règle d'accès, correspondant à un parcours de pixels successifs selon le second axe, et dans lequel l'unité de gestion d'accès mémoire (603) est adaptée pour mettre en oeuvre les étapes suivantes :
/1/ appliquer la première règle d'accès sur la taille indiquée du bloc de pixels selon le premier axe du référentiel d'image, à partir de l'adresse de référence ;
/2/ obtenir une adresse suivante en appliquant la seconde règle d'accès, selon le second axe du référentiel d'image, à partir de l'adresse de référence entre deux pixels consécutifs ;
/3/ appliquer la première règle d'accès sur la taille indiquée du bloc de pixels selon le premier axe du référentiel d'image, à partir de l'adresse suivante ;
/4/ obtenir une adresse suivante en appliquant la seconde règle d'accès selon le second axe du référentiel d'image à partir de la dernière adresse suivante obtenue entre deux pixels consécutifs ;
/5/ répéter l'étape /3/ à partir de l'adresse suivante obtenue à l'étape /4/ et répéter l'étape /4/.

7. Dispositif d'interface (13) selon la revendication 6, dans lequel l'unité de gestion d'accès (603) est adaptée pour appliquer une règle d'accès par la mise en oeuvre d'un micro programme, ledit micro programme comprenant des micro-instructions permettant de gérer des sauts d'adresse dans la mémoire qui correspondent au parcours des pixels du bloc de pixels.

8. Dispositif d'interface (13) selon la revendication 6 ou 7, dans lequel l'unité de gestion d'accès (603) applique une règle d'accès selon l'un des premier et second axes du référentiel d'image qui correspond à une séquence de sauts d'adresse dans la mémoire, et, en fonction de l'adresse de référence, détermine une partie au moins de cette séquence de sauts à appliquer à partir de l'adresse de référence.

9. Dispositif d'interface (13) selon l'une quelconque des revendications 6 à 8, dans lequel l'unité de gestion d'accès (603) est adaptée pour appliquer une règle d'accès à la mémoire correspondant à une règle de lecture de données et fournit les données lues au processeur.

10. Dispositif d'interface (13) selon l'une quelconque des revendications 6 à 9, dans lequel l'unité de gestion d'accès (603) est adaptée pour appliquer une règle d'accès à la mémoire correspondant à une règle d'écriture de données, et stocke dans la mémoire (14) des données qui sont reçues depuis le processeur.

11. Système de traitement d'images comprenant un dispositif d'interface selon l'une quelconque des revendications 6 à 10.

12. Programme d'ordinateur pour un dispositif d'interface (13), comprenant des instructions aptes à mettre en oeuvre le procédé selon l'une quelconque des revendications 1 à 5, lors d'une exécution du programme par des moyens de traitement du dispositif d'interface.
